(19) Europäisches Patentamt
European Patent Office
Office européen des brevets

(11) **EP 3 244 673 A1**

(12) **EUROPEAN PATENT APPLICATION**

(43) Date of publication:
**15.11.2017 Bulletin 2017/46**

(51) Int Cl.:
*H04W 72/02* (2009.01)    *H04W 72/08* (2009.01)
*H04W 16/10* (2009.01)

(21) Application number: **16290080.7**

(22) Date of filing: **12.05.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **ALCATEL LUCENT**
**92100 Boulogne-Billancourt (FR)**

(72) Inventors:
• **GACANIN, Haris**
**2018 Antwerpen (BE)**
• **ROSTAMI, Soheil**
**2018 Antwerpen (BE)**

(74) Representative: **Plas, Axel Ivo Michel**
**IP HILLS NV**
**Hubert Frère-Orbanlaan 329**
**9000 Gent (BE)**

(54) **A MANAGEMENT PLATFORM AND METHOD FOR CHANNEL SELECTION FOR A WIRELESS ACCESS POINT**

(57)    A management platform (100) selects a channel that will be used by a wireless access point during a future time interval in an environment with multiple wireless access points of one or more wireless local area network. A neighbour monitoring unit (101) of the management platform (100) thereto monitors the signal strength and active state duration of neighbouring wireless access points on channels of interest. An interference prediction unit (103) estimates for each one of the channels of interest the total interference level, i.e. the total unwanted energy, perceived by the wireless access point during the future time interval. A channel selector (104) selects amongst the channels of interest the channel with lowest total interference level estimated as the channel for use by the wireless access point during the future time interval.

Fig. 1

Printed by Jouve, 75001 PARIS (FR)

## Description

### Technical Field

The present invention generally relates to the selection of a channel for wireless communications between a so called wireless access point and a client device in wireless local area networks or WLANs. The invention in particular relates to channel assignment in WLANs with improved reliability and stability, and with reduced co-channel interference.

### Background

For years, the number of WLANs and number of access points in WLANs has been growing. Each access point of a WLAN has to operate on one of the available channels within a frequency band. Standard specifications like IEEE 802.11 foresee several methods for selection and assignment of a channel to an access point. Generally, three possibilities exist: the channel may be pre-configured in the access point by the vendor, the channel may be selected and configured in the access point by the customer, or the channel may be selected and configured by a management centre, i.e. a platform enabling an operator to remotely manage WLANs. The latter management centre typically runs on servers of such operator or on cloud servers, i.e. server infrastructure operated and managed by a third party.

As a result of the growing number of WLANs and the growing number of access points in WLANs, co-channel interference is increasing resulting in less stable and less reliable WLAN connections. Co-channel interference is the interference between a first channel selected for use by a first access point and a second channel selected for use by a second access point. The access points may belong to a single WLAN or to different WLANs. As a result of overlap between the frequency bands of the first channel and second channel and/or as a result of overlap between the geographical area's covered by the first and second access points, for instance in a situation where the first and second access points use the same channels, interference between the channels used by the two access points will affect the effective throughput or bandwidth, and the stability of the channels resulting in slow and unreliable WLAN communications.

As a basic design rule, the administrator of access points, i.e. the user or operator having administrator rights to configure access points, will assign nonoverlapping channels to access points with overlapping geographical range in order to reduce interference.

The article "A Client-driven Approach for Channel Management in Wireless LANs" from the authors Arunesh Mishra, Vladmir Brik, Suman Banerjee, Aravind Srinivasan and William Arbaugh addresses the problem of channel assignment to access points in WLANs and concludes that knowledge of the load balancing of clients amongst access points can further improve channel assignment since it enables to detect opportunities for channel re-use in an area covered by multiple access points. Access points which are devoid of clients in their overlapping region may be using the same channels or channels with overlapping frequency bands because there are no clients that can generate interfering communications in such situation. By assigning the same channels to such neighbouring access points spectrum re-use is optimized. The article of Mishra et al. consequently describes a centralized technique for channel assignment to access points in organizations such as hotels, airports, business offices, etc., that relies on conflict set colouring to assign colours or channels to access points with minimum risk for conflict given the load balancing, i.e. the spreading of clients across access points and the eventual presence of clients in overlapping regions between access points. The conflict set colouring technique from Mishra et al. is client-driven: interference effects must be captured by clients and reported to the central platform.

In the article "A Successive Refinement Approach to Wireless Infrastructure Network Deployment", the authors N. Ahmed and S. Keshav conclude that the choice of transmit power levels for access points in WLANs with high density of access points impacts the performance more than the channel allocation strategy. The article therefore proposes an algorithm wherein channel assignment and power level selection are jointly tackled through a successive refinement approach that is applied by the installer of the WLAN at set-up.

### Summary

The above described existing techniques for channel assignment in WLANs are disadvantageous because they are either static, hard decision-based channel assignment methods or at best reactive in nature. Static methods like rule-of-thumb configuration at installation or the technique known from Ahmed et al. do not adapt to changing situations. Neighbouring access points may be assigned different channels, may be turned off, may switch between transmitting mode and idle mode, etc., as a result of which interference levels in certain channels change and the channel assignment that was considered optimal for an access point at installation may no longer be optimal at a later point in time. Known dynamic methods like the one from Mishra et al. are reactive in nature. They rely on information received from clients or access points indicating that interference has increased or throughput has gone down. Thus, the clients may have experienced instable and/or slow WLAN connectivity for some time before channels are re-allocated.

It is an objective of the present invention to disclose a platform and method for channel selection for access points in WLANs that resolves one or more of the above-identified shortcomings of prior art solutions. More particularly, it is an objective of the present invention to disclose a platform and method for channel selection in WLANs that reduces the co-channel interference between access points and consequently improves the overall reliability, throughput and stability of WLAN connections.

Embodiments of the invention disclose a management platform adapted to select a channel for use by a wireless access point during a future time interval in an environment with multiple wireless access points of one or more wireless local area network, the management platform being defined by claim 1, comprising:

- a neighbour monitoring unit adapted to monitor for channels of interest a signal strength and active state duration of neighbouring wireless access points of the wireless access point;
- an interference prediction unit configured to estimate for each one of the channels of interest a total interference level perceived by the wireless access point during the future time interval from the signal strength and active state duration monitored for the neighbouring wireless access points; and
- a channel selector adapted to select amongst the channels of interest a channel with lowest total interference level estimated as the channel for use by the wireless access point during the future time interval.

Thus, according to the present invention, the management centre predicts the total unwanted energy level that a target access point will perceive during a future time interval considering the channel history of neighbouring access points, i.e. the channels used by neighbouring access points, the signal strengths of neighbouring access points and the durations of on/off periods of neighbouring access points. The estimated total unwanted energy during a future time interval enables to assess the future reliability of channels of interest for the target access point, and consequently enables to switch the channel assigned to the target access point in advance rather than reactively after the throughput or stability has gone down, or even worse after connectivity is lost.

In embodiments of the management platform adapted to select a channel for use by a wireless access point according to the present invention, defined by claim 2, the signal strength corresponds to the Received Signal Strength Indicator or $RSSI_{i,k}$ measured by the wireless access point for a neighbouring wireless access point i on a channel k of interest.

Thus, the management platform according to the invention may receive from the target access point an RSSI value measured by the target access point for each neighbouring access point and each channel of interest. In the above notation, i represents an index denoting the neighbouring access points of the target access point and k represents an index denoting the channels of interest, i.e. the channels that are considered for future usage by the target access point.

In embodiments of the management platform adapted to select a channel for use by a wireless access point according to the present invention, as defined by claim 3, the total interference level $E_{j,k}$ estimated for the wireless access point j on a channel k of interest corresponds to:

$$E_{j,k} = \sum_i 10^{\frac{RSSI_{i,k}}{10}} \cdot T_{j,k}^{ON}$$

with

$$T_{j,k}^{ON} = \frac{P_{j,k}}{\lambda_{j,k}^{ON}}$$

wherein

$T_{j,k}^{ON}$ represents a mean active period duration for the wireless access point j on the channel k;

$P_{j,k}$ represents a probability for the wireless access point j to be active on channel k during a future time interval T; and

$\lambda_{j,k}^{ON}$ represents a rate parameter for an exponential distribution that is assumed to reflect the probability that the wireless access point j is active on channel k.

Thus, the total unwanted energy perceived by the target access point in a future time interval may be estimated using a probability based approach wherein an exponential distribution is assumed for the on/off behaviour of the neighbouring access points. The memoryless nature of the exponential distribution makes it the most suitable candidate to model the random pattern that the on/off behaviour of neighbouring access points will follow. The skilled person will appreciate that alternate embodiments may use other statistical distributions to model the random on/off behaviour of neighbouring access points.

In embodiments of the management platform adapted to select a channel for use by a wireless access point according to the present invention, defined by claim 4, the channel for use by the wireless access point j during the future time interval corresponds to the channel k with lowest $E_{j,k}$ amongst the channels of interest.

Indeed, the channel selector in the management platform according to the present invention may be configured to select as channel for future use by the target access point the channel of interest for which the predicted total unwanted energy is the lowest. Alternative embodiments could be contemplated wherein for instance the channel is selected randomly amongst the three channels with lowest predicted total unwanted energy, or wherein the channel remains unchanged unless the predicted gain in total unwanted energy exceeds a certain threshold, etc.

In addition to a management platform as defined by claim 1, the present invention also relates to a corresponding method to select a channel for use by a wireless access point during a future time interval in an environment with multiple wireless access points of one or more wireless local area network, the method being defined by claim 5, comprising:

- monitoring for channels of interest a signal strength and active state duration of neighbouring wireless access points of the wireless access point;
- estimating for each one of the channels of interest a total interference level perceived by the wireless access point during the future time interval from the signal strength and active state duration monitored for the neighbouring wireless access points; and
- selecting amongst the channels of interest a channel with lowest total interference level estimated as the channel for use by the wireless access point during said future time interval.

## Brief Description of the Drawings

Fig. 1 is a functional block scheme of an embodiment of the management platform adapted to select a channel for use by a wireless access point according to the present invention; and

Fig. 2 illustrates an embodiment of the method to select a channel for use by a wireless access point according to the present invention.

## Detailed Description of Embodiment(s)

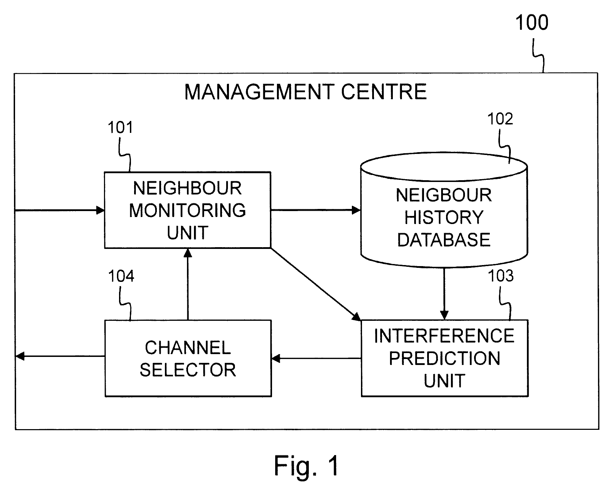

Fig. 1 shows a management centre 100, typically running on a cloud server or on a server in the operator's office and enabling the operator to manage the access points in one or plural WLAN(s). The management centre 100 comprises a neighbour monitoring unit 101, a neighbour history database 102, an interference prediction unit 103 and a channel selector 104, units that jointly select and assign the channels used by the access points in the WLAN(s). In the following paragraphs, the operation of these units to select a channel for use by a target access point $AP_j$ during a future transmission time interval or TTI is described.

The neighbour monitoring unit 101 sequentially observes channels of interest $CH_k$, i.e. candidate channels for use by the target access point $AP_j$ during the future TTI, and constructs a list of discovered neighbouring access points $AP_i$ of the target access point $AP_j$ and their corresponding RSSI levels over all channels of interest $RSSI_{i,k}$. These RSSI levels $RSSI_{i,k}$ are measured by the target access point $AP_j$ and reported to the neighbour monitoring unit 101, for instance periodically or on request of the neighbour monitoring unit 101.

The neighbour history database 102 is a memory wherein historic information with respect to the signal strengths, i.e. the RSSI levels, and the duration of active/idle states of neighbouring access points $AP_i$ is stored. The neighbour monitoring unit 101 updates the neighbour history database 102 and thereto regularly acquires channel parameters indicative for the active or idle state of the neighbouring access points $AP_i$ of target access point $AP_j$. In case of an idle access point, it is assumed that the RSSI level will be equal to the average RSSI if the access point will be active during the future TTI. In case of an active access point, it is assumed that the RSSI level will be equal to the current measured RSSI level if the access point will be active during the future TTI.

To model the channel usage pattern of each neighbouring access point $AP_i$ of the target access point $AP_j$, the alternative exponential on/off model is applied. The memoryless nature of exponential distributions make such distributions most suitable candidates for the random on/off pattern of the neighbouring access nodes $AP_i$. The channel usage pattern of each neighbouring access point $AP_i$ alternates between two modes: in the "on" mode, the access point $AP_i$

is active and transmitting/receiving, in the "off" mode, the access point $AP_i$ is idle. The durations of the "on" and "off" periods are assumed to be independently exponentially distributed. For a access point $AP_j$ over channel $CH_k$, the duration of both the "on" period and the "off" period hence follow an exponential distribution with respective mean values $1/\lambda_{j,k}^{ON}$ and $1/\lambda_{j,k}^{OFF}$. Herein, $\lambda_{j,k}^{ON}$ and $\lambda_{j,k}^{OFF}$ represent the rate parameters of exponential distributions. The probability that access point $AP_j$ will be active over channel $CH_k$ during the next TTI with duration T can be calculated using the current observation on channel $CH_k$ as follows:

$$P_{j,k} = \begin{cases} \dfrac{\lambda_{j,k}^{OFF}}{\lambda_{j,k}^{OFF} + \lambda_{j,k}^{ON}} - \dfrac{\lambda_{j,k}^{OFF}}{\lambda_{j,k}^{OFF} + \lambda_{j,k}^{ON}} e^{-\left(\lambda_{j,k}^{OFF} + \lambda_{j,k}^{ON}\right)T}, & AP_j \text{ is OFF in } CH_k \\[2em] \dfrac{\lambda_{j,k}^{OFF}}{\lambda_{j,k}^{OFF} + \lambda_{j,k}^{ON}} - \dfrac{\lambda_{j,k}^{ON}}{\lambda_{j,k}^{OFF} + \lambda_{j,k}^{ON}} e^{-\left(\lambda_{j,k}^{OFF} + \lambda_{j,k}^{ON}\right)T}, & AP_j \text{ is ON in } CH_k \end{cases}$$

The mean time $\overline{T}_{j,k}^{ON}$ of the active period or "on" period of access point $AP_j$ over channel $CH_k$ can be calculated as follows:

$$\overline{T}_{j,k}^{ON} = \frac{P_{j,k}}{\lambda_{j,k}^{ON}}$$

To compare the quality of the channels for target access point $AP_j$ during the next TTI, the interference prediction unit determines the total unwanted energy in Joules that the target access point $AP_j$ will receive from all neighbouring access points $AP_i$ as follows:

$$E_{j,k} = \sum_i 10^{\frac{RSSI_{i,k}}{10}} \overline{T}_{j,k}^{ON}, \text{ with } i \neq j$$

Herein, $RSSI_{i,k}$ represents the average received RSSI in dBm from neighbouring access point $AP_i$ over channel $CH_k$ at target access point $AP_j$.

The channel selector 104 at last selects the channel $CH_k$ with smallest estimated total unwanted energy Ej,k. In other words, the channel selector 104 selects as channel $CH_k$ for target access point $AP_j$ the channel with:

$$CH_k = \arg\min E_{j,k}$$

It is noticed that the exponential rate parameters $\lambda_{j,k}^{ON}$ and $\lambda_{j,k}^{OFF}$ and the RSSI values $RSSI_{i,k}$ can be estimated using maximum likelihood based using prior observation results, i.e. the channel history.

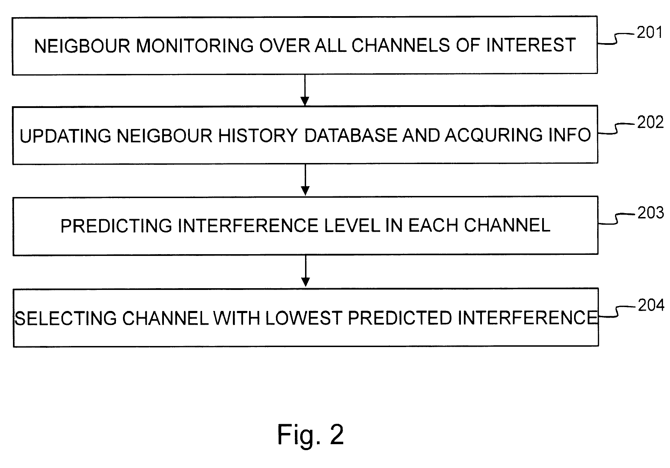

Fig. 2 illustrates the steps of an embodiment of the method to select a channel for future use by a target access point, typically executed on a cloud server or on one or more server in the operator's office. Firstly, in step 201, the activity of neighbouring access points of the target access point is monitored over all channels of interest. More particularly, the duration of active "on" and idle "off" periods of such neighbouring access points is monitored, and their signal strength as perceived by the target access point is monitored. The collected information on neighbouring access points of the target access point is stored in a neighbour history database in step 202. In step 203, information available in the neighbour history database is consulted and used to estimate the interference level, i.e. the total unwanted energy that the target access point will receive from its neighbouring access points at a future point in time. The interference level is estimated for each channel of interest such that in step 204, the channel of interest with lowest predicted interference level can be selected for future use by the target access point.

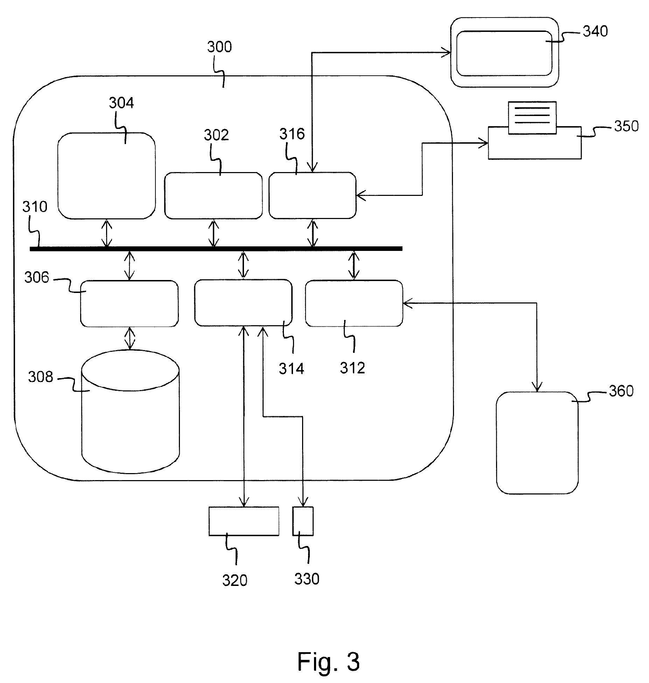

Fig.3 shows a suitable computing system 300 for hosting the channel selection platform according to the invention, an embodiment of which is illustrated by Fig. 1. Computing system 300 may in general be formed as a suitable general purpose computer and comprise a bus 310, a processor 302, a local memory 304, one or more optional input interfaces 314, one or more optional output interfaces 316, a communication interface 312, a storage element interface 306 and one or more storage elements 308. Bus 310 may comprise one or more conductors that permit communication among the components of the computing system. Processor 302 may include any type of conventional processor or microprocessor that interprets and executes programming instructions. Local memory 304 may include a random access memory (RAM) or another type of dynamic storage device that stores information and instructions for execution by processor 302 and/or a read only memory (ROM) or another type of static storage device that stores static information and instructions for use by processor 304. Input interface 314 may comprise one or more conventional mechanisms that permit an operator to input information to the computing device 300, such as a keyboard 320, a mouse 330, a pen, voice recognition and/or biometric mechanisms, etc. Output interface 316 may comprise one or more conventional mechanisms that output information to the operator, such as a display 340, a printer 350, a speaker, etc. Communication interface 312 may comprise any transceiver-like mechanism such as for example two 1 Gb Ethernet interfaces that enables computing system 300 to communicate with other devices and/or systems, for example mechanisms for communicating with one or more other computing systems. The communication interface 312 of computing system 300 may be connected to such another computing system 360 by means of a local area network (LAN) or a wide area network (WAN), such as for example the internet, in which case the other computing system may for example comprise a suitable web server. Storage element interface 306 may comprise a storage interface such as for example a Serial Advanced Technology Attachment (SATA) interface or a Small Computer System Interface (SCSI) for connecting bus 310 to one or more storage elements 308, such as one or more local disks, for example 1TB SATA disk drives, and control the reading and writing of data to and/or from these storage elements 308. Although the storage elements 308 above is described as a local disk, in general any other suitable computer-readable media such as a removable magnetic disk, optical storage media such as a CD or DVD, -ROM disk, solid state drives, flash memory cards, ... could be used.

The steps executed in embodiments of the method for WLAN channel selection according to the present invention may be implemented as programming instructions stored in local memory 304 of the computing system 300 for execution by its processor 302. Alternatively the instructions may be stored on the storage element 308 or be accessible from another computing system through the communication interface 312.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A management platform (100) adapted to select a channel for use by a wireless access point during a future time interval in an environment with multiple wireless access points of one or more wireless local area network, said management platform (100) comprising:

   - a neighbour monitoring unit (101) adapted to monitor on channels of interest a signal strength and active state duration of neighbouring wireless access points of said wireless access point;
   - an interference prediction unit (103) configured to estimate for each one of said channels of interest a total interference level perceived by said wireless access point during said future time interval from said signal strength and active state duration monitored for said neighbouring wireless access points; and
   - a channel selector (104) adapted to select amongst said channels of interest a channel with lowest total interference level estimated as said channel for use by said wireless access point during said future time interval.

2. A management platform (100) adapted to select a channel for use by a wireless access point as defined by claim 1, wherein said signal strength corresponds to the Received Signal Strength Indicator or $RSSI_{i,k}$ measured by said wireless access point for a neighbouring wireless access point i on a channel k of interest.

3. A management platform adapted to select a channel for use by a wireless access point as defined by claim 2, wherein said total interference level $E_{j,k}$ estimated for said wireless access point j on a channel k of interest corresponds to:

$$E_{j,k} = \sum_i 10^{\frac{RSSI_{i,k}}{10}} \cdot T_{j,k}^{ON}$$

with

$$T_{j,k}^{ON} = \frac{P_{j,k}}{\lambda_{j,k}^{ON}}$$

wherein

$T_{j,k}^{ON}$ represents a mean active period duration for said wireless access point j on said channel k;

$P_{j,k}$ represents a probability for said wireless access point j to be active on channel k during a future time interval T; and

$\lambda_{j,k}^{ON}$ represents a rate parameter for an exponential distribution that is assumed to reflect the probability that said wireless access point j is active on channel k.

4. A management platform (100) adapted to select a channel for use by a wireless access point as defined by claim 3, wherein said channel for use by said wireless access point j during said future time interval corresponds to the channel k with lowest $E_{j,k}$ amongst said channels of interest.

5. A method to select a channel for use by a wireless access point during a future time interval in an environment with multiple wireless access points of one or more wireless local area network, said method comprising:

    - monitoring (201) for channels of interest a signal strength and active state duration of neighbouring wireless access points of said wireless access point;
    - estimating (203) for each one of said channels of interest a total interference level perceived by said wireless access point during said future time interval from said signal strength and active state duration monitored for said neighbouring wireless access points; and
    - selecting (204) amongst said channels of interest a channel with lowest total interference level estimated as said channel for use by said wireless access point during said future time interval.

MANAGEMENT CENTRE

100

NEIGHBOUR MONITORING UNIT
101

NEIGBOUR HISTORY DATABASE
102

INTERFERENCE PREDICTION UNIT
103

CHANNEL SELECTOR
104

Fig. 1

NEIGBOUR MONITORING OVER ALL CHANNELS OF INTEREST — 201

UPDATING NEIGBOUR HISTORY DATABASE AND ACQURING INFO — 202

PREDICTING INTERFERENCE LEVEL IN EACH CHANNEL — 203

SELECTING CHANNEL WITH LOWEST PREDICTED INTERFERENCE — 204

Fig. 2

EP 3 244 673 A1

Fig. 3

Europäisches
Patentamt

European
Patent Office

Office européen
des brevets

## EUROPEAN SEARCH REPORT

Application Number

EP 16 29 0080

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/245361 A1 (HUGHES KENT W [US] ET AL) 27 August 2015 (2015-08-27) | 1,2,5 | INV.<br>H04W72/02<br>H04W72/08<br>H04W16/10 |
| A | * paragraphs [0016], [0018], [0020], [0022], [0034], [0042] - [0043], [0063], [0065] - [0067] *<br>----- | 3,4 | |
| A | US 2014/286249 A1 (YAMADA DAISUKE [JP] ET AL) 25 September 2014 (2014-09-25)<br>* paragraph [0065] *<br>----- | 1-5 | |
| A | US 2005/003827 A1 (WHELAN ROBERT J [US]) 6 January 2005 (2005-01-06)<br>* paragraphs [0283], [0297] *<br>----- | 1-5 | |

TECHNICAL FIELDS
SEARCHED        (IPC)

H04W

The present search report has been drawn up for all claims

| Place of search | Date of completion of the search | Examiner |
|---|---|---|
| The Hague | 14 October 2016 | Dionisi, M |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

        ..........................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 16 29 0080

This annex lists the patent family members relating to the patent documents cited in the above-mentioned European search report.
The members are as contained in the European Patent Office EDP file on
The European Patent Office is in no way liable for these particulars which are merely given for the purpose of information.

14-10-2016

| Patent document cited in search report | | Publication date | Patent family member(s) | | Publication date |
|---|---|---|---|---|---|
| US 2015245361 | A1 | 27-08-2015 | NONE | | |
| US 2014286249 | A1 | 25-09-2014 | CN | 104066185 A | 24-09-2014 |
| | | | JP | 2014183422 A | 29-09-2014 |
| | | | US | 2014286249 A1 | 25-09-2014 |
| US 2005003827 | A1 | 06-01-2005 | EP | 1597922 A2 | 23-11-2005 |
| | | | US | 2005003827 A1 | 06-01-2005 |
| | | | WO | 2004073243 A2 | 26-08-2004 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **N. AHMED ; S. KESHAV.** *A Successive Refinement Approach to Wireless Infrastructure Network Deployment*